(19) Europäisches Patentamt / European Patent Office / Office européen des brevets

(11) **EP 2 751 625 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
*G05B 19/042* *(2006.01)*    *G05B 23/02* *(2006.01)*
*G06F 1/30* *(2006.01)*

(21) Anmeldenummer: **12761709.0**

(22) Anmeldetag: **22.08.2012**

(86) Internationale Anmeldenummer:
**PCT/EP2012/066307**

(87) Internationale Veröffentlichungsnummer:
**WO 2013/030053 (07.03.2013 Gazette 2013/10)**

(54) **VERFAHREN ZUM BETREIBEN EINES FELDGERÄTS FÜR DIE PROZESSINSTRUMENTIERUNG SOWIE FELDGERÄT**

METHOD FOR OPERATING A FIELD DEVICE FOR PROCESS INSTRUMENTATION AND FIELD DEVICE

PROCÉDÉ PERMETTANT DE FAIRE FONCTIONNER UN APPAREIL DE TERRAIN DESTINÉ AU SUIVI INSTRUMENTAL D'UN PROCESSUS AINSI QU'APPAREIL DE TERRAIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2011 DE 102011082018**

(43) Veröffentlichungstag der Anmeldung:
**09.07.2014 Patentblatt 2014/28**

(73) Patentinhaber: **Siemens Aktiengesellschaft 80333 München (DE)**

(72) Erfinder:
• **CHEMISKY, Eric**
  **67250 Soultz sous forets (FR)**
• **FRIESEN, Slava**
  **76139 Karlsruhe (DE)**
• **GEPPERT, Michael**
  **77833 Ottersweier (DE)**

(56) Entgegenhaltungen:
EP-A1- 1 202 139    DE-A1-102007 059 847
DE-A1-102008 054 883    DE-A1-102009 050 645

**Beschreibung**

Die Erfindung betrifft ein Verfahren zum Betreiben eines Feldgeräts für die Prozessinstrumentierung, wobei das Feldgerät einen Analogausgang mit einem elektrischen Anschluss aufweist, an welchen eine Zweidrahtleitung zur Übertragung eines analogen Ausgangssignals anschließbar ist, gemäß dem Oberbegriff des Anspruchs 1 sowie ein Feldgerät für die Prozessinstrumentierung, welches für einen derartigen Betrieb ausgebildet ist.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer Leitstation vorgegebenen Strategie beeinflusst werden. Als Beispiele für Stellglieder seien ein Regelventil, eine Heizung oder eine Pumpe genannt. Zur Übertragung von Prozessvariablen und von Feldgeräteparametern ist häufig an den Feldgeräten eine Kommunikationsschnittstelle vorgesehen, die mit einer 4 bis 20 mA-Schnittstelle eine Kommunikation über eine Zweidrahtleitung ermöglicht. Damit kann eine Verbindung zwischen Feldgerät und beispielsweise einem Automatisierungsgerät realisiert werden, bei welcher mit einem analogen Stromsignal gleichzeitig ein Wert einer Prozessvariablen und die zum Betrieb des Feldgeräts erforderliche Hilfsenergie übertragen werden. Der in die Zweidrahtleitung der 4 bis 20 mA-Schnittstelle eingeprägte Schleifenstrom wird im Folgenden je nach Zusammenhang auch als Stromsignal, Fehlerstrom oder einfach als Strom bezeichnet.

Damit dem Feldgerät ausreichend Hilfsenergie zur Verfügung steht, wird eine Mindestspannung von beispielsweise 10,5 V an den Klemmen des Feldgeräts, welche zum elektrischen Anschluss der Zweidrahtleitung dienen, gefordert.

Wenn in einem Normalbetrieb, d. h. bei Ausgabe eines Schleifenstroms zwischen 4 und 20 mA in die Zweidrahtleitung, eine Unterschreitung der Mindestspannung durch das Feldgerät erkannt wird, kann dieses in einen Fehlerzustand übergehen, in welchem ein unterer Fehlerstrom von beispielsweise 3,6 mA als analoges Stromsignal ausgegeben wird. Nach diesem Zustandsübergang fällt an einem Bürdenwiderstand, den die angeschlossene Zweidrahtleitung aus der Sicht des Feldgeräts darstellt, aufgrund des reduzierten Schleifenstroms eine geringere Spannung ab und die Klemmenspannung steigt wieder über die vorbestimmte Mindestspannung an. Basiert die Detektion einer Unterschreitung der Mindestspannung auf einem einfachen Schwellwertvergleich, so kann das Feldgerät erneut in den Normalbetrieb übergehen. Sobald dies geschieht, wird ein dem aktuell zu übertragenden Wert der Prozessvariablen entsprechender Wert der Stromstärke des analogen Stromsignals durch das Feldgerät eingestellt, wobei der Wert der Stromstärke zwischen 4 mA und 20 mA liegt. Das hat zur Folge, dass am Bürdenwiderstand erneut eine erhöhte Spannung abfällt, das Feldgerät eine Unterschreitung der Mindestspannung an den Anschlussklemmen detektiert und wieder in den Fehlerzustand übergehen kann. Dies führt in nachteiliger Weise zu einem wiederholten Wechsel zwischen Fehlerzustand und Normalbetrieb des Feldgeräts, wobei das analoge Stromsignal, welches über die Zweidrahtleitung übertragen wird, ständig zwischen zwei Werten hin- und herpendelt.

Eine mögliche Lösung dieses Problems könnte darin gesehen werden, dass der Anwender des Feldgeräts den Bürdenwiderstand so wählt, dass dieser einen Wert zwischen 230 Ohm und 1100 Ohm hat, und dafür sorgt, dass eine ausreichend große Versorgungsspannung bereitsteht, damit die Mindestspannung an den Anschlussklemmen selbst bei maximalem Schleifenstrom von beispielsweise 22,8 mA nicht unterschritten wird. Je größer der Schleifenstrom, desto größer ist nämlich der Spannungsabfall am Bürdenwiderstand und desto geringer ist damit die an den Klemmen des Feldgeräteanschlusses anliegende Spannung. Um ein Hin- und Herpendeln des Signals am Analogausgang zu verhindern, könnte die Unterspannungsdetektion der Klemmenspannung mit einer Hysterese versehen werden, die allerdings ausreichend groß gewählt werden müsste, wenn der gesamte Bereich der Spezifikation des Feldgeräts abgedeckt werden soll. In nachteiliger Weise würde dann das Feldgerät erst bei einer relativ hohen Klemmenspannung aus dem Fehlerzustand wieder in den Normalbetrieb zurückkehren. Zudem wären in nachteiliger Weise manuelle Eingriffe des Bedieners zu einer geeigneten Auslegung der Anwendungsschaltung und zur Parametrierung des Feldgeräts erforderlich, die mit einem gewissen Aufwand verbunden sind und fehlerbehaftet sein können.

Ein Feldgerät zur Prozessinstrumentierung mit einem Analogausgang, an welchen eine Zweidrahtleitung zur Übertragung eines analogen Ausgangssignals anschließbar ist, ist beispielsweise aus der DE 10 2007 059 847 A1 bekannt.

Aus der DE 10 2008 054 883 A1 ist ein Verfahren zum Betreiben eines Feldgeräts für die Prozessinstrumentierung bekannt, wobei das Feldgerät einen Analogausgang mit einem elektrischen Anschluss aufweist, an welchen eine Zweidrahtleitung zur Übertragung eines analogen Stromsignals anschließbar ist. Gemäß dem bekannten Verfahren wird die Versorgungsspannung des Feldgeräts auf Unterschreiten einer Mindestspannung überwacht. Dazu wird die Versorgungsspannung auf einen durch einen Mikrokontroller detektierbaren Spannungswert mittels eines resistiven Spannungsteilers skaliert und auf eine Schmitt-Trigger Stufe als Signaleingang des Mikrokontrollers geführt oder es wird ein Komparatoreingang verwendet, wenn eine genauere und zuverlässigere Detektion benötigt wird.

Der Erfindung liegt die Aufgabe zugrunde, ein Verfahren zum Betreiben eines Feldgeräts für die Prozessinstrumentierung zu finden, mit welchem weitgehend ohne manuelle Vornahme von Einstellungen zur Parametrierung des Feldgeräts ein Hin- und Herpendeln des Signals am Analogausgang zwischen zwei Werten verhindert werden kann. Eine weitere Aufgabe besteht darin, ein Feldgerät für die Prozessinstrumentierung zu schaffen, welches nach einem derartigen Verfahren betreibbar ist.

Zur Lösung dieser Aufgabe weist das neue Verfahren zum Betreiben eines Feldgeräts der eingangs genannten Art die im kennzeichnenden Teil des Anspruchs 1 angegebenen Merkmale auf. In den abhängigen Ansprüchen sind vorteilhafte Weiterbildungen des Verfahrens und in Anspruch 6 ein Feldgerät für die Prozessinstrumentierung, welches nach dem Verfahren betreibbar ist, beschrieben.

Die Erfindung beruht auf der Erkenntnis, dass auf eine manuelle Eingabe einer Hysterese für die Unterspannungsdetektion verzichtet werden kann, wenn die Hysteresespanne, die zur Vermeidung eines Hin- und Herpendelns des Signals am Analogausgang des Feldgeräts zwischen zwei Werten erforderlich ist, durch das Feldgerät automatisch ermittelt und eingestellt wird. Das Pendeln wird in jedem Fall vermieden, wenn die Spanne der Hysterese dem Produkt einer vorbestimmten Bürde und der für den Zustandsübergang im Betrieb des Feldgeräts erforderlichen Stromerhöhung entspricht. Dabei kann als vorbestimmte Bürde der obere Grenzwert, welcher in der Spezifikation des Feldgeräts für den Bürdenwiderstand angegeben ist, eingesetzt werden. Die maximal im Betrieb des Feldgeräts erforderliche Stromerhöhung entspricht der Differenz des Maximalwerts und des jeweils im Fehlerzustand eingestellten Werts der Stromstärke des zu übertragenden analogen Stromsignals.

Da der Maximalwert vergleichsweise selten im Betrieb des Feldgeräts eingestellt werden muss, kann in vorteilhafter Weise eine schnelle Rückkehr in den Normalbetrieb und damit eine höhere Verfügbarkeit des Feldgeräts erreicht werden, wenn die Spanne der Hysterese in Abhängigkeit der Stromstärke ermittelt wird, die durch das Feldgerät zur Ausgabe des aktuellen Werts der zu übertragenden Prozessvariablen einzustellen ist. Das Feldgerät kehrt dann aus dem Fehlerzustand in den Normalbetrieb zurück, wenn der im Fehlerzustand ermittelte Wert der an den Klemmen des elektrischen Anschlusses anliegenden Spannung abzüglich des Produkts der vorbestimmten Bürde und der für einen Zustandsübergang zur Ausgabe eines aktuellen Werts der zu übertragenden Prozessvariable erforderlichen Stromerhöhung die Mindestklemmenspannung übersteigt. Bei einer derartigen Festlegung der Hysterese kann jedoch nicht ausgeschlossen werden, dass das Feldgerät bei weiterem Ansteigen des analogen Stromsignals zur Übertragung einer veränderlichen Prozessvariable erneut in den Fehlerzustand übergeht, da der Spannungsabfall an der Bürde steigt und somit die Mindestspannung an den Klemmen erneut unterschritten werden kann.

Prinzipiell ist es möglich, die Bürde anhand der Länge der Zweidrahtleitung am Einbauplatz zu ermitteln und als Parameterwert in das Feldgerät einzugeben, so dass diese durch den Bediener vorbestimmt wird. Eine diesbezügliche manuelle Eingabe kann jedoch in vorteilhafter Weise entfallen, wenn auch die Bürde automatisch ermittelt wird. Zur Vorbestimmung der Bürde wird dann durch das Feldgerät bei zumindest einer ersten Stromstärke des analogen Stromsignals und einer zweiten, von der ersten verschiedenen Stromstärke ein erster Wert bzw. ein zweiter Wert der an den Klemmen des elektrischen Anschlusses anliegenden Spannung ermittelt und durch Auswertung der verschiedenen Strom- und Spannungswerte die Bürde berechnet. Beispielsweise bei Verwendung von jeweils zwei Strom- und Spannungswerten kann zur Berechnung der Quotient der Differenz der beiden Spannungswerte und der Differenz der beiden Stromwerte ermittelt werden. Auf diese Weise wird eine automatische Anpassung an die jeweils herrschenden Gegebenheiten am Einbauplatz des Feldgeräts erhalten und die Zuverlässigkeit der Vermeidung von Schwingungen auf dem analogen Stromsignal weiter verbessert.

Häufig wird ein zulässiger Wertebereich für die Bürde vorgegeben, der beim Einsatz des Feldgeräts in einer automatisierungstechnischen Anlage eingehalten werden muss. Anhand des automatisch ermittelten Werts der Bürde kann zusätzlich eine Diagnose auf Einhalten dieser Vorgaben durchgeführt und festgestellt werden, ob die tatsächlich vorhandene Bürde innerhalb dieser Spezifikation liegt. In vorteilhafter Weise gibt das Feldgerät ein Signal zur Anzeige eines Fehlers aus, wenn der berechnete Wert der Bürde sich außerhalb des vorbestimmten Wertebereichs befindet.

In einer weiteren vorteilhaften Ausgestaltung ermittelt das Feldgerät automatisch anhand der Mindestklemmenspannung und der Bürde die Versorgungsspannung, die zur Ausgabe der maximal im Betrieb des Feldgeräts einzustellenden Stromstärke des analogen Stromsignals erforderlich ist. Der dabei ermittelte Wert wird als Signal zu dessen Anzeige beispielsweise mittels HART-Kommunikation über die Zweidrahtleitung an die angeschlossene Spannungsquelle oder über ein Display des Feldgeräts an einen Bediener ausgegeben. In vorteilhafter Weise kann damit die extern erzeugte Versorgungsspannung an die jeweiligen Gegebenheiten angepasst werden. Dies wirkt sich insbesondere günstig auf den Energieverbrauch des Feldgeräts aus, wenn die gerade erforderliche Versorgungsspannung anstatt einer unnötig hohen Versorgungsspannung eingestellt wird.

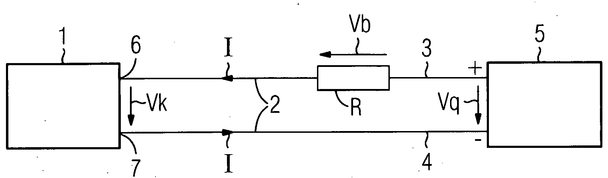

Anhand der Zeichnung, in der ein Ausführungsbeispiel der Erfindung dargestellt ist, werden im Folgenden die Erfindung sowie Ausgestaltungen und Vorteile näher erläutert.

Gemäß der einzigen Figur ist ein Feldgerät 1, beispielsweise ein Druckmessumformer, über eine Zweidrahtleitung 2 mit zwei Leitungen 3 und 4 mit einem Spannungsgeber 5, der beispielsweise Bestandteil einer Analogeingabebaugruppe eines nicht weiter dargestellten Automatisierungsgeräts ist, verbunden. Das Feldgerät 1 weist eine 4 bis 20 mA-Schnittstelle als Analogausgang mit Klemmen 6 und 7 auf, an welche die Zweidrahtleitung 2 zur Übertragung eines analogen Stromsignals als Schleifenstrom I angeschlossen ist. Damit das Feldgerät 1 über die Zweidrahtleitung 2 mit ausreichender Hilfsenergie versorgt werden kann, ist für eine Klemmenspannung Vk, die zwischen den beiden Klemmen 6 und 7 am Feldgerät 1 anliegt, eine Mindestspannung von beispielsweise 10,5 V vorgeschrieben. Eine Bürde, welche die Zweidrahtleitung 2 an den Klemmen 6 und 7 des Feldgeräts 1 darstellt, ist durch einen Bürdenwiderstand R in der Leitung 3 modelliert. An dem Bürdenwiderstand R fällt eine der jeweiligen Stromstärke des Schleifenstroms I entsprechende Spannung Vb ab. Eine Versorgungsspannung Vq, welche der Spannungsgeber 5 liefert, liegt somit vermindert um die Spannung Vb als Klemmenspannung Vk an den Klemmen 6 und 7 des Feldgeräts 1 an. Der Wert des Bürdenwiderstands R könnte prinzipiell durch einen Bediener anhand der Leitungslänge und bekannter Leitungsparameter berechnet oder manuell gemessen und als Parameter in das Feldgerät 1 eingegeben werden. In dem dargestellten Ausführungsbeispiel wird jedoch der Wert des Bürdenwiderstands R durch das Feldgerät 1 in vorteilhafter Weise automatisch bestimmt. Dazu ermittelt das Feldgerät 1 bei einer ersten Stromstärke I1 einen ersten Wert Vk1 der Klemmenspannung Vk und bei einer zweiten Stromstärke I2 einen zweiten Wert Vk2 der Klemmenspannung Vk. Der Bürdenwiderstand ergibt sich dann zu:

$$R = \frac{Vk2 - Vk1}{I1 - I2} \; .$$

In einem konkreten Beispiel mit

- Vk1 = 13,95 V,
- Vk2 = 12,9 V,
- I1 = 5 mA und
- I2 = 10 mA

ergibt sich damit ein Bürdenwiderstand zu 210 Ohm. Da dieser Bürdenwiderstand außerhalb eines zulässigen Bereichs von 230 bis 1100 Ohm liegt, wird der Benutzer des Feldgeräts 1 beispielsweise durch eine Ausgabe auf einer Anzeige des Feldgeräts oder durch eine Meldung mittels HART-Kommunikation auf der Zweidrahtleitung 2 an den Spannungsgeber 5, der diesen Fehler an ein in der Figur nicht dargestelltes Bediengerät weitergibt, gewarnt und darüber informiert, dass der Mindestwert des Bürdenwiderstands von 230 Ohm unterschritten wird, damit geeignete Maßnahmen zur Behebung des Montagefehlers eingeleitet werden können.

Wird in einem zweiten konkreten Beispiel Vk1 = 12 V, Vk2 = 13,5 V, I1 = 5 mA und I2 = 10 mA ermittelt, so ergibt sich daraus ein Bürdenwiderstand R = 300 Ohm und das Feldgerät gibt ein Signal zur Anzeige aus, dass der Bürdenwiderstand R in Ordnung ist, da er innerhalb der Spezifikation liegt.

Die Messung des Bürdenwiderstands R erfolgt vorzugsweise einmalig bei der Inbetriebnahme des Feldgeräts 1 und muss, solange sich die Einbaubedingungen nicht verändern, nicht mehr wiederholt werden. Bei späteren Berechnungen zur automatischen Bestimmung einer Hysterese, die später noch genauer beschrieben werden, sowie einer minimalen Versorgungsspannung Vq des Spannungsgebers 5 wird der einmal ermittelte Wert des Bürdenwiderstands R genutzt.

Wenn die Klemmenspannung Vk unter einen Mindestwert von beispielsweise 10,5 V im Betrieb des Feldgeräts 1 abfällt, wechselt dieses in einen Fehlerzustand, in welchem durch das Feldgerät 1 ein niedriger Wert der Stromstärke des Stroms I eingestellt wird. Dieser Fehlerstrom If beträgt beispielsweise 3,6 mA. Bei der mit dem Zustandswechsel verbundenen Absenkung der Stromstärke des Schleifenstroms I reduziert sich auch die am Bürdenwiderstand R abfallende Spannung Vb, so dass im Fehlerzustand die Klemmenspannung Vk wieder über die Mindestspannung von 10,5 V ansteigen kann. Um ein Hin- und Herpendeln der Stromstärke des Schleifenstroms I zu verhindern, wechselt das Feldgerät 1 jedoch erst dann wieder in den Normalbetrieb, in welchem es eine Stromstärke In des Schleifenstroms I einstellt, die dem jeweils zu übertragenden Wert der Prozessvariable entspricht, wenn sichergestellt ist, dass auch bei dieser Stromstärke, die zwischen 4 und 20 mA betragen kann, der Mindestwert der Klemmenspannung Vk nicht erneut unterschritten wird. Es wird also geprüft, ob die Summe eines im Fehlerzustand aktuell anliegenden Werts Vkf der Klemmenspannung Vk und des Produkts des Bürdenwiderstands R und der für den Zustandsübergang erforderlichen Stromerhöhung die Mindestklemmenspannung übersteigt. Das heißt:

$$Vkf - (In - If) \cdot R > Vk\min \; .$$

Ist dies der Fall, kann in den Normalbetrieb zurückgekehrt werden, in welchem das Feldgerät 1 seiner gewünschten Funktion entsprechend Werte der jeweiligen Prozessvariable auf die Zweidrahtleitung 2 ausgibt, indem es eine dem jeweiligen Wert entsprechende Stromstärke des Schleifenstroms I einprägt. Andernfalls verbleibt das Feldgerät 1 im Fehlerzustand und stellt den Schleifenstrom auf die Stromstärke If = 3,6 mA ein.

Zur Minimierung der Verlustleistung im Feldgerät 1 und im Spannungsgeber 5 wird durch das Feldgerät 1 weiterhin eine minimale Versorgungsspannung Vqmin ermittelt, die durch den Spannungsgeber 5 eingestellt werden muss, damit auch bei maximaler Stromstärke Imax des Schleifenstroms I das Einhalten der Mindestklemmenspannung Vkmin an den Klemmen 6 und 7 des Feldgeräts 1 gewährleistet werden kann. Sie wird berechnet nach der Formel:

$$Vq\min = R \cdot I\max + Vk\min .$$

Der so berechnete Wert der minimalen Versorgungsspannung wird durch HART-Kommunikation über die Zweidrahtleitung 2 an den Spannungsgeber 5 übergeben, so dass dieser die erzeugte Versorgungsspannung Vq auf den Wert Vqmin einstellen kann. Mit dieser Einstellung ist sowohl die Verlustleistung im Feldgerät 1 als auch die im Spannungsgeber 5 minimal. In vorteilhafter Weise sind hierzu keinerlei manuelle Parametereingaben erforderlich.

**Patentansprüche**

1. Verfahren zum Betreiben eines Feldgeräts (1) für die Prozessinstrumentierung, wobei das Feldgerät (1) einen Analogausgang mit einem elektrischen Anschluss aufweist, an welchen eine Zweidrahtleitung (2) zur Übertragung eines analogen Stromsignals (I) anschließbar ist, **dadurch gekennzeichnet, dass** das Feldgerät (1) während seines Betriebs an einer Zweidrahtleitung (2) in einem Fehlerzustand, in welchem durch das Feldgerät (1) ein niedriger Wert für die Stromstärke des analogen Stromsignals (I) zur Anzeige des Fehlerzustands eingestellt wird, das Produkt einer vorbestimmten Bürde (R) und der für einen Zustandsübergang in einen Normalbetrieb erforderlichen Erhöhung der Stromstärke des analogen Stromsignals (I) ermittelt, die Differenz eines im Fehlerzustand aktuell ermittelten Werts der an den Klemmen (6, 7) des elektrischen Anschlusses anliegenden Spannung (Vk) und des ermittelten Produkts bildet und vor einem Zustandsübergang in einen Normalbetrieb prüft, ob die gebildete Differenz eine vorbestimmte Mindestklemmenspannung übersteigt.

2. Verfahren nach Anspruch 1, **dadurch gekennzeichnet, dass** das Feldgerät nur dann aus dem Fehlerzustand in den Normalbetrieb zurückkehrt, wenn die Differenz des im Fehlerzustand ermittelten Werts der an den Klemmen des elektrischen Anschlusses anliegenden Spannung (Vk) und des Produkts der vorbestimmten Bürde (R) und der für einen Zustandsübergang zur Ausgabe eines aktuellen Werts der zu übertragenden Prozessvariable erforderlichen Stromerhöhung eine vorbestimmte Mindestklemmenspannung übersteigt.

3. Verfahren nach Anspruch 1 oder 2, **dadurch ge-** **kennzeichnet, dass** zur Vorbestimmung der Bürde das Feldgerät (1) bei zumindest einer ersten Stromstärke des analogen Stromsignals (I) und einer zweiten, von der ersten verschiedenen Stromstärke des analogen Stromsignals (I) einen ersten Wert bzw. einen zweiten Wert der an den Klemmen (6, 7) des elektrischen Anschlusses anliegenden Spannung (Vk) ermittelt und durch Auswertung der Werte die Bürde (R) berechnet.

4. Verfahren nach Anspruch 3, **dadurch gekennzeichnet, dass** das Feldgerät (1) ein Signal zur Anzeige eines Fehlers ausgibt, wenn der berechnete Wert der Bürde außerhalb eines vorbestimmten Wertebereichs liegt.

5. Verfahren nach einem der vorhergehenden Ansprüche, **dadurch gekennzeichnet, dass** das Feldgerät (1) anhand der Mindestklemmenspannung und der Bürde die zur Ausgabe der maximal im Betrieb des Feldgeräts einzustellenden Stromstärke des analogen Stromsignals (I) erforderliche Versorgungsspannung ermittelt und ein Signal zu deren Anzeige ausgibt.

6. Feldgerät für die Prozessinstrumentierung, das einen Analogausgang mit einem elektrischen Anschluss aufweist, an welchen eine Zweidrahtleitung (2) zur Übertragung eines analogen Stromsignals (I) anschließbar ist, **dadurch gekennzeichnet, dass** das Feldgerät (1) dazu ausgebildet ist, während seines Betriebs an einer Zweidrahtleitung (2) in einem Fehlerzustand, in welchem durch das Feldgerät (1) ein niedriger Wert für die Stromstärke des analogen Stromsignals (I) zur Anzeige des Fehlerzustands eingestellt wird, das Produkt einer vorbestimmten Bürde (R) und der für einen Zustandsübergang in einen Normalbetrieb erforderlichen Erhöhung der Stromstärke des analogen Stromsignals (I) zu ermitteln, die Differenz eines im Fehlerzustand aktuell ermittelten Werts der an den Klemmen (6, 7) des elektrischen Anschlusses anliegenden Spannung (Vk) und des ermittelten Produkts zu bilden und vor einem Zustandsübergang in einen Normalbetrieb zu prüfen, ob die gebildete Differenz eine vorbestimmte Mindestklemmenspannung übersteigt.

**Claims**

1. Method for operating a field device (1) for process instrumentation, wherein the field device (1) comprises an analogue output having an electrical connection, to which a two-wire line (2) for the transmission of an analogue current signal (I) can be connected, **characterised in that** the field device (1), during its operation on a two-wire line (2) in an error state in which a low value for the current intensity of the analogue current signal (I) is set by the field device (1) to display the error state, determines the product of a predetermined apparent ohmic resistance (R) and the increase in the current intensity of the analogue current signal (I) needed for a state transition to normal operation, forms the difference between a value, currently determined in the error state, of the voltage (Vk) present at the terminals (6, 7) of the electrical connection and the determined product, and prior to a state transition to normal operation checks whether the difference formed exceeds a predetermined minimum terminal voltage.

2. Method according to claim 1, **characterised in that** the field device returns from the error state to normal operation only if the difference between the value, determined in the error state, of the voltage (Vk) present at the terminals of the electrical connection and the product of the predetermined apparent ohmic resistance (R) and the current increase needed for a state transition to output a present value of the process variable to be transferred exceeds a predetermined minimum terminal voltage.

3. Method according to claim 1 or 2, **characterised in that** in order to predetermine the apparent ohmic resistance, the field device (1) determines, in the case of at least one first current intensity of the analogue current signal (I) and a second current intensity, different from the first one, of the analogue current signal (I), a first value or a second value of the voltage (Vk) present at the terminals (6, 7) of the electrical connection, and calculates the apparent ohmic resistance (R) by evaluating the values.

4. Method according to claim 3, **characterised in that** the field device (1) outputs a signal to display an error if the calculated value of the apparent ohmic resistance lies outside a predetermined range of values.

5. Method according to one of the preceding claims, **characterised in that** the field device (1) determines, on the basis of the minimum terminal voltage and the apparent ohmic resistance, the supply voltage needed to output the maximum current intensity of the analogue current signal (I) to be set during operation of the field device and outputs a signal to display this.

6. Field device for process instrumentation, which has an analogue output having an electrical connection to which a two-wire line (2) for transmitting an analogue current signal (I) can be connected, **characterised in that** the field device (1) is designed, during its operation on a two-wire line (2) in an error state in which a low value for the current intensity of the analogue current signal (I) is set by the field device (1) to display the error state, to determine the product of a predetermined apparent ohmic resistance (R) and the increase in the current intensity of the analogue current signal (I) needed for a state transition to normal operation, to form the difference between a value, currently determined in the error state, of the voltage (Vk) present at the terminals (6, 7) of the electrical connection and the determined product, and prior to a state transition to normal operation to check whether the difference formed exceeds a predetermined minimum terminal voltage.

## Revendications

1. Procédé pour faire fonctionner un appareil ( 1 ) de terrain pour le suivi instrumental d'un processus, dans lequel l'appareil ( 1 ) de terrain comporte une sortie analogique ayant une connexion électrique, à laquelle une ligne ( 2 ) bifilaire peut être raccordée pour la transmission d'un signal ( I ) analogique de courant, **caractérisé en ce que** l'appareil ( 1 ) de terrain détermine, pendant son fonctionnement sur une ligne ( 2 ) bifilaire dans un état de défaut dans lequel il est réglé par l'appareil ( 1 ) de terrain une valeur basse de l'intensité de courant du signal ( I ) analogique de courant pour l'indication de l'état de défaut, le produit d'une charge ( R ) définie à l'avance par l'augmentation, nécessaire à un passage à l'état dans un fonctionnement normal, de l'intensité du courant du signal ( I ) analogique de courant, forme la différence entre une valeur, déterminée présentement dans l'état de défaut, de la tension ( Vk ) s'appliquant aux bornes ( 6, 7 ) de la connexion électrique et le produit déterminé et contrôle, avant un passage à l'état dans un fonctionnement normal, si la différence formée dépasse une tension aux bornes minimums définie à l'avance.

2. Procédé suivant la revendication 1, **caractérisé en ce que** l'appareil de terrain ne revient de l'état de défaut au fonctionnement normal que si la différence entre la valeur, déterminée dans l'état de défaut, de la tension ( Vk ) s'appliquant aux bornes de la connexion électrique et le produit de la charge ( R ) définie à l'avance par l'augmentation du courant nécessaire à une transition d'état pour l'émission d'une valeur présente des variables de processus à transmettre, dépasse une tension aux bornes minimums définie à l'avance.

3. Procédé suivant la revendication 1 ou 2, **caractérisé en ce que**, pour déterminer la charge, l'appareil ( 1 ) de terrain détermine, pour au moins une première intensité de courant du signal ( I ) analogique de courant et pour une deuxième intensité de courant, différente de la première, du signal ( I ) analogique de courant, une première valeur et une deuxième valeur de la tension ( Vk ) s'appliquant aux bornes ( 6, 7 ) de la connexion électrique et calcule la charge ( R ) en exploitant les valeurs.

4. Procédé suivant la revendication 3, **caractérisé en ce que** l'appareil ( 1 ) de terrain émet un signal pour indiquer un défaut si la valeur calculée de la charge se trouve en dehors d'une plage de valeurs définie à l'avance.

5. Procédé suivant l'une des revendications précédentes, **caractérisé en ce que** l'appareil ( 1 ) de terrain détermine, à l'aide de la tension aux bornes minimum et de la charge, la tension d'alimentation nécessaire pour l'émission de l'intensité de courant, à régler au maximum en fonctionnement de l'appareil de terrain, du signal ( I ) analogique de courant et émet un signal pour son indication.

6. Appareil de terrain pour le suivi instrumental d'un processus, qui a une sortie analogique ayant une connexion électrique, à laquelle une ligne ( 2 ) bifilaire peut être raccordée pour la transmission d'un signal ( I ) analogique de courant, **caractérisé en ce que** l'appareil ( 1 ) de terrain est constitué pour, pendant son fonctionnement sur une ligne ( 2 ) bifilaire dans un état de défaut, dans lequel il est réglé par l'appareil ( 1 ) de terrain une valeur assez basse de l'intensité de courant du signal ( I ) analogique de courant pour indiquer l'état de défaut, déterminer le produit d'une charge ( R ) définie à l'avance par l'augmentation, nécessaire pour un passage à l'état dans un fonctionnement normal, de l'intensité de courant du signal ( I ) analogique de courant, pour former la différence entre une valeur, déterminée présentement dans l'état de défaut, de la tension ( Vk ) s'appliquant aux bornes ( 6, 7 ) de la connexion électrique, et le produit déterminé et pour contrôler, avant un passage à l'état dans un fonctionnement normal, si la différence formée dépasse une tension aux bornes minimum définie à l'avance.

**IN DER BESCHREIBUNG AUFGEFÜHRTE DOKUMENTE**

**In der Beschreibung aufgeführte Patentdokumente**

- DE 102007059847 A1
- DE 102008054883 A1